# EUROPEAN PATENT APPLICATION

(11) **EP 4 253 578 A1**
(43) Date of publication of application: **04.10.2023**
(21) Application number: 23165504.4
(22) Date of filing: 30.03.2023
(51) Int. Cl.: C22B 1/00, C01D 15/08, C22B 26/12, H01M 10/54, B09B 3/00

(54) **METHOD OF PREPARING HIGH-PURITY LITHIUM CARBONATE THROUGH REDUCTION CALCINING OF WASTE CATHODE MATERIAL**

(30) Priority: 01.04.2022 KR 20220041103
(71) Applicant: Sebitchem Co., Ltd., Gimcheon-si, Gyeongsangbuk-do 39541 (KR)
(72) Inventor: PARK, Jung Won, 39550 Gyeongsangbuk-do (KR); AN, Deock Kyu, 39658 Gyeongsangbuk-do (KR); SEN, Dipak, 41569 Daegu (KR)
(74) Representative: Fuchs Patentanwälte Partnerschaft mbB

(57) **Abstract**

Proposed is a method of preparing high-purity lithium carbonate through reduction calcining of waste cathode materials without using a carbonate such as sodium carbonate. The method reduces the amount of water required for lithium carbonate recovery, thereby reducing energy consumption for evaporation of water. The method includes (a) preparing scrap powder, (b) reducing and calcining the scrap powder using activated carbon, (c) preparing a lithium hydrogen carbonate solution by adding carbon dioxide gas and the reduced and calcined scrap powder to 8°C to 12°C soft water, (d) separating the lithium hydrogen carbonate solution into solid and liquid; (e) converting lithium hydrogen carbonate into lithium carbonate by heating, evaporating, and concentrating the lithium hydrogen carbonate solution, and (f) obtaining the lithium carbonate through filtration.

## Description

### CROSS REFERENCE TO RELATED APPLICATION

The present application claims priority to Korean Patent Application No. 10-2022-0041103, filed April 1, 2022, the entire contents of which is incorporated herein for all purposes by this reference.

### BACKGROUND OF THE INVENTION

### 1. Field of the Disclosure

The present disclosure relates to a method of preparing high-purity lithium carbonate through reduction calcining of waste cathode material.

### 2. Description of the Related Art

Lithium secondary batteries produce high operating voltages, can stand up well to repeated charging and discharging, and can be implemented in small sizes. Therefore, they are widely used as power sources for communication and information devices such as mobile phones, laptops, and digital cameras, and the demand is increasing rapidly in line with the commercialization potential of electric vehicles. As cathode active materials for lithium secondary batteries, lithium-salts containing cobalt, nickel, and manganese are used.

In recent years, as the demand for electric vehicles has rapidly increased, the demand for lithium secondary batteries for electric vehicles has also increased rapidly. In the lithium secondary batteries for electric vehicles, a cathode active material having a high nickel content is used.

On the other hand, since Co, Ni, Mn, and Li are relatively expensive metals, significant economic benefits are expected when they are recycled. Therefore, research on methods for recovering these metals is being actively conducted. Typically, after leaching the powder obtained by processing waste cathode materials generated during the production of lithium secondary batteries or from waste batteries with an inorganic acid, impurities are removed from the obtained leachate, and then each valuable metal is extracted and separated from the leachate with an appropriate organic solvent. By doing so, these metals can be recovered.

In particular, in connection with the technology for recovering lithium, there are some related art documents. For example, Korean Patent No. 10-1682217 discloses a method of preparing lithium carbonate by recovering lithium from a cathode active material of a waste lithium secondary battery, and Korean Patent Application Publication No. 10-2021-0138922 discloses a method of preparing lithium carbonate by recovering lithium from a waste electrode material of a lithium secondary battery.

However, in the case of preparing lithium carbonate by recovering lithium contained in waste liquid generated during a process of preparing a nickel-cobalt-manganese composite liquid using a waste cathode material, sulfuric acid and sodium hydroxide are used in the process of preparing the nickel-cobalt-manganese composite liquid. As a result, since the concentrations of sodium and sulfuric acid in wastewater are very high, there is a problem in that sodium and sulfate ions are included in a large amount in the end product, which means lithium carbonate.

In addition, since lithium carbonate has very low solubility in water in the process of recovering lithium from a waste cathode material, the lithium concentration in the recovered lithium carbonate solution is about 1,000 to 1,500 ppm. For this reason, a large amount of water is used to recover lithium carbonate, and a large amount of process solution must be concentrated.

### SUMMARY OF THE DISCLOSURE

The present disclosure has been made to solve the problems occurring in the related art, and an objective of the present disclosure is to provide a method of preparing high-purity lithium carbonate through reduction calcining of waste cathode materials without using a carbonate such as sodium carbonate.

Another objective of the present disclosure is to provide a method of efficiently producing high-purity lithium carbonate while reducing the amount of water required for lithium carbonate recovery to save energy required for evaporation of water.

One embodiment of the present disclosure relates to a method of recovering lithium carbonate from a waste cathode material of a lithium secondary battery, the method including: (a) preparing scrap powder; (b) reducing and calcining the scrap powder using activated carbon; (c) preparing a lithium hydrogen carbonate solution by adding carbon dioxide gas and the scrap powder reduced and calcined through the step (b) to soft water of a temperature in a range of 8°C to 12°C; (d) performing solid-liquid separation on the lithium hydrogen carbonate solution prepared through the step (c); (e) converting lithium hydrogen carbonate into lithium carbonate by heating, evaporating, and concentrating the lithium hydrogen carbonate solution having undergone the step (d); and (f) obtaining the lithium carbonate produced in the step (e) through filtration.

The scrap powder may include lithium nickel cobalt manganese oxide (Li (Ni, Co,Mn) O₂).

In the step (c), the soft water may be added in a ratio of 1500 to 2000 parts by weight based on 100 parts by weight of the scrap powder.

In the step (c), the carbon dioxide gas may be added at a pressure of 1 to 5 kgf/cm³ and a flow rate of 0.5 to 5L/min.

The step (e) may be performed by heating and evaporation at a temperature in a range of 60°C to 120°C.

The step (f) may be performed by stirring at temperatures of 60°C to 100°C at a speed of 250 rpm to 400 rpm for 60 minutes to 120 minutes.

The present disclosure can provide a method of preparing high-purity lithium carbonate through reduction calcining of waste cathode materials without using a carbonate such as sodium carbonate.

According to the present disclosure, it is possible to provide a method of efficiently producing high-purity lithium carbonate while reducing the amount of water required for lithium carbonate recovery to save energy required for evaporation of water.

### BRIEF DESCRIPTION OF THE DRAWINGS

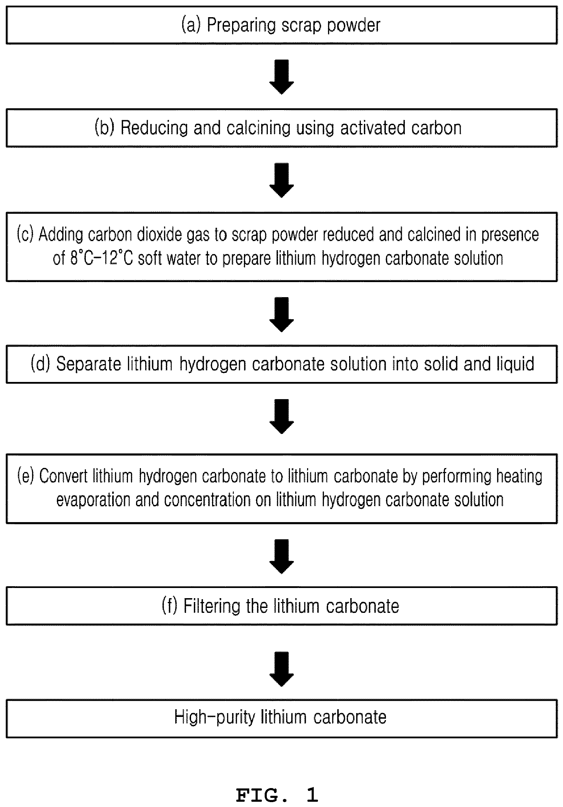

FIG. 1 is a flowchart illustrating a method of recovering lithium carbonate from a waste cathode material of a lithium secondary battery, according to an embodiment of the present disclosure;
FIG. 2 is a view illustrating changes in pH during conversion to a lithium hydrogen carbonate solution; and
FIG. 3 is an XRD pattern of lithium carbonate prepared according to one embodiment of the present disclosure.

### DESCRIPTION OF THE PREFERRED EMBODIMENTS

Hereinafter, examples of the present disclosure will be described in more detail with reference to the accompanying drawings. However, it is noted that the present disclosure should not be interpreted as being limited by the examples described below.

### (a) Preparing Scrap Powder

In the present description, "scrap powder" refers to a powder generated during the production of a cathode active material for a lithium secondary battery or refer to a powder obtained from cathode material scrap.

The scrap powder essentially contain metals such as Co, Ni, Mn, and Li and also contain impurities such as Al, Fe, and Cu, and carbon. Various compositions may be made depending on the type of scrap treated. For example, in one embodiment of the present disclosure, scrap containing lithium nickel cobalt manganese oxide (LiNiₓCo_{y}Mn_{1-x-y}O₂, where 0 <x<1, 0<y<1) . More specifically, scrap powder may be used which contain, with respect to 100 parts by weight of the scrap powder, 10 to 50 parts by weight of nickel (Ni), 5 to 20 parts by weight of cobalt (Co), 5 to 20 parts by weight of manganese (Mn), 2 to 8 parts by weight of lithium (Li), 0.5 to 5 parts by weight of copper (Co), 0.5 to 5 parts by weight of aluminum (Al), 0.5 to 5 parts by weight of iron (Fe), and 0.5 to 5 parts by weight of other metals.

### (b) Reducing and Calcining Scrap Powder Using Activated Carbon

The step (b) is a step of reducing and calcining the scrap powder prepared in the step (a). After mixing the scrap powder with activated carbon, reduction calcining is performed on the mixture of the scrap powder and the activated carbon in a calcining furnace such as a rotary kiln. The activated carbon is included in an amount of 5 to 50 parts by weight and preferably 25 to 35 parts by weight, based on 100 parts by weight of the scrap powder. The calcining temperature is in a range of 600°C to 1000°C and is preferably 750°C. The calcining time is in a range of 30 to 180 minutes and is preferably 60 minutes.

The reaction formula of the reduction calcining reaction of the lithium nickel cobalt manganese oxide generated in the step (b) is as follows.

9LiNi_{1/3}Co_{1/3}Mn_{1/3}O₂ + 0.25C → 3NiO + 3MnO₂ + Co₃O₄ + 4.5Li₂O + 0.25CO₂(g)

4MnO₂ + C → 2Mn₂O₃ + CO₂(g)

Li₂O + CO₂(g) → Li₂CO₃

### (c) Preparing Lithium Hydrogen Carbonate Solution by Adding Scrap Powder Reduced and Calcined in Step (B) and Carbon Dioxide Gas to Soft Water in Temperature Range of 8°C to 12°C

The step (c) is a step of preparing a lithium hydrogen carbonate solution by adding carbon dioxide gas while dissolving the scrap powder reduced and fired in the step (b) in soft water. The soft water means water having a hardness of 10 or less. Soft water is added in an amount of 1500 to 2000 parts by weight with respect to 100 parts by weight of the reduced and calcined scrap powder. When soft water is added in an amount corresponding to the lower limit of the range described above, the lithium carbonate solution cannot be sufficiently obtained. When the amount of soft water that is added exceeds the upper limit of the range, it is not preferable in terms of lithium carbonate recovery efficiency.

The temperature of soft water is in a range of 8°C to 12°C and is preferably 10°C. When the temperature of soft water is out of the range described above, the lithium recovery rate is lowered. The dissolution proceeds under stirring at a speed in a range of 250 rpm to 400 rpm for a range of 60 minutes to 120 minutes.

In the step (c), lithium carbonate is converted into lithium hydrogen carbonate by the addition of carbon dioxide gas. Since lithium hydrogen carbonate has a higher solubility in water than lithium carbonate, when converting lithium carbonate into lithium hydrogen carbonate, the amount of water to be used to recover the same amount of lithium carbonate as the end product can be reduced, and therefore, the amount of water to be evaporated during the evaporation concentration is reduced. Therefore, the energy consumption is reduced.

The carbon dioxide gas is added at a pressure of 1 to 5 kgf/cm³ and a flow rate of 0.5 to 5 L/min. When the carbon dioxide gas is added under conditions that are below the lower limits of the ranges described above, the amount of carbon dioxide gas is insufficient. When the carbon dioxide gas is added under conditions that are above the upper limits of the ranges described above, since the amount of carbon dioxide is excessive, the process is not efficient.

The reaction formula of lithium carbonate generated in the step (c) is shown below.

Li₂CO₃ + CO₂ + H₂O → 2LiHCO₃

### (d) Solid-Liquid Separation of Lithium Hydrogen Carbonate Solution Prepared in Step (c);

The step (d) is a step of separating the lithium hydrogen carbonate solution prepared in the step (c) by a solid-liquid separation method. The prepared lithium hydrogen carbonate solution is in a state in which the scrap powder is mixed together, and the lithium hydrogen carbonate solution is separated into solid and liquid.

### (e) Converting Lithium Hydrogen Carbonate into Lithium Carbonate by Heating, Evaporating and Concentrating Lithium Hydrogen Carbonate Solution Separated in Step (d)

The step (e) is a step of heaving, evaporating, and concentrating the lithium hydrogen carbonate solution separated in the step (d). The lithium carbonate solution is concentrated under reduced pressure. The reduced pressure concentration conditions include a temperature range of 60°C to 100°C and a pressure range of 100 mbar to 200 mbar.

To obtain lithium carbonate as the end product, lithium hydrogen carbonate is heated to be converted back into lithium carbonate, and at the same time water is evaporated to concentrate the lithium hydrogen carbonate solution.

The reaction formula of lithium hydrogen carbonate generated in the step (e) is shown below.

2LiHCO₃ + Heat → Li₂CO₃ + CO₂ + H₂O

The conditions of the heating evaporation concentration process are not particularly limited if it is possible to evaporate the solvent until the content of the solvent falls within the range described above. For example, the process may be performed at a temperature range of 60°C to 120°C, preferably 70°C to 110°C, and more preferably 80°C to 100°C. When the process is performed in the described condition, there is an advantage that the reaction time can be reduced. When the heating evaporation concentration proceeds at a temperature below 60°C, lithium hydrogen carbonate is not sufficiently converted to lithium carbonate. When the process proceeds at a temperature above 120°C, there is a problem in that the solvent is likely to be vaporized. Therefore, the heating evaporation concentration process is preferably performed in the range described above.

### (f) Filtration of Lithium Carbonate Produced in Step (e)

The step (f) is a step of obtaining lithium carbonate generated in the step (e) through filtration. By filtering the lithium carbonate solution, solid lithium carbonate can be obtained.

The filtration is performed using a vacuum filter. The filtration is not particularly limited in the present disclosure, and may be interpreted in terms commonly understood in the art.

### Example

### Example 1

200g of a waste cathode material and 50g of activated carbon were prepared.

The waste cathode material and the activated carbon were mixed, the mixture was put into a calcining furnace, the temperature was raised for 90 minutes, and reduction calcining was performed at 750°C for 60 minutes. After the calcining was finished, the reduced calcined product was cooled, scrap powder was collected. The lithium concentration of the scrap powder was 7%.

The scrap powder was dissolved in 0°C soft water by adding 1590 parts by weight of soft water to 100 parts by weight of the reduced calcined scrap powder. While dissolving the scrap powder, carbon dioxide gas was supplied at a pressure of 2 kgf/cm³ at a flow rate of 1 L/min for 30 minutes. Thereafter, 228 parts by weight of 10°C soft water was additionally added per 100 parts by weight of the scrap powder, and then the mixture was stirred for 1 hour. In this process, lithium carbonate was converted into lithium hydrogen carbonate.

The prepared lithium hydrogen carbonate solution contains waste cathode material excluding undissolved lithium, as well as dissolved scrap powder and soft water. Here, through solid-liquid separation, the lithium hydrogen carbonate solution in which the scrap powder and the soft water are mixed was separated.

The separated lithium hydrogen carbonate solution was concentrated by heating and evaporating under reduced pressure at a temperature of 80°C for 60 minutes. In this process, lithium hydrogen carbonate was converted back to lithium carbonate, and water was evaporated. Thereafter, by filtering the concentrated lithium carbonate solution with a vacuum filtration device, high-purity lithium carbonate was recovered.

### Experimental Example 1: Conversion to lithium hydrogen carbonate in lithium carbonate solution

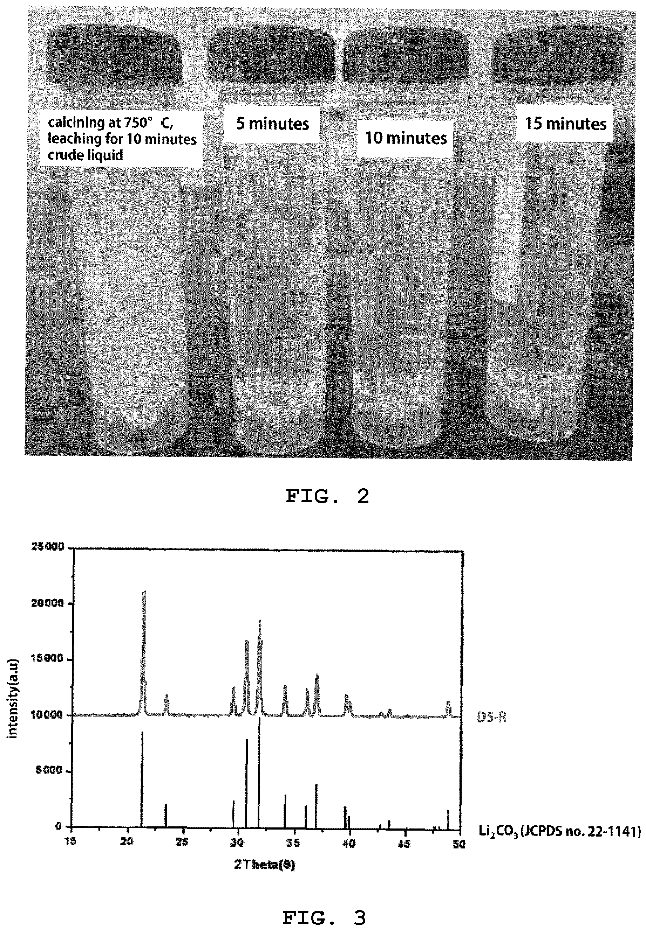

2 kgf/cm³ of carbon dioxide gas was injected at a pressure of 1 L/min to a lithium carbonate solution with a lithium concentration of 1,005 ppm to convert lithium carbonate to lithium hydrogen carbonate. The fact that the conversion occurred can be confirmed by detecting a pH change (e.g., a pH drop). Further, an MgCl₂ solution was added to confirm the conversion from lithium carbonate to lithium hydrogen carbonate. The obtained test results are presented in Table 1 and FIG. 2.

The reaction formula is shown below.

MgCl₂ + Li₂CO₃ - MgCO₃ ↓ + 2LiCl

**[Table 1]**

| Classification | pH |
|---|---|
| Lithium carbonate solution | 11.3 |
| After 5 minutes of CO₂ gas injection | 10.3 |
| After 10 minutes of CO₂ gas injection | 9.97 |
| After 5 minutes of CO₂ gas injection | 9.70 |

### Experimental Example 2: Comparison of lithium recovery rate according to lithium hydrogen carbonate conversion

An experiment was conducted to compare the recovery rate of lithium between the case where conversion to lithium hydrogen carbonate was performed and the case where conversion to lithium hydrogen carbonate was not performed. More specifically, the lithium carbonate recovery rate between the example of the present disclosure and the comparative example was compared. In The comparative example, lithium carbonate was recovered in the same manner as in the example of the present disclosure, except that carbon dioxide gas was not added, and 1818 g of 10°C soft water was added with respect to 100 parts by weight of the scrap powder. The results are shown in Table 2.

**[Table 2]**

| Classification | Li concentration | Solution weight (g) | Lithium recovery rate (%) |
|---|---|---|---|
| Raw material | 7% | - | - |
| Comparative Example | 2,614 ppm | 4288 | 79.1% |
| Example | 3,021 ppm | 4390 | 94.7% |

The formula for obtaining the lithium recovery rate is based on the content of lithium contained in 200 g of scrap powder. For example, in the case of the example, (4,390 * 0.003021) / (0.07 * 200) * 100 = 94.7%

From the results of Table 2, it was confirmed that when lithium carbonate was recovered by adding carbon dioxide gas to convert lithium carbonate into lithium hydrogen carbonate, the lithium recovery rate was much better than that of the comparative example in which the same amount of water was used but no carbon dioxide gas was added.

### Experimental Example 3: Lithium carbonate component analysis result

Table 3 shows the results of analysis of the component of the lithium carbonate prepared in Example 1.

**[Table 3]**

| Classification | Unit | Result | Method |
|---|---|---|---|
| Li₂CO₃ | % | 99.5 | Titration |
| Mg | ppm | 2.37 | ICP-OES |
| Ca | | 125.8 | |
| K | | 24.6 | |
| Na | | 85 | |
| Zn | | 1.3 | |
| Si | | 113.6 | |
| Cu | | 4.84 | |

Table 4 shows the results of analysis of the content of lithium carbonate obtained by a method of recovering lithium in the form of lithium carbonate, contained in wastewater generated during the process of preparing a nickel-cobalt-manganese composite solution from waste cathode material using sodium hydroxide and sulfuric acid.

**[Table 4]**

| Classification | Unit | Result | Method |
|---|---|---|---|
| Li | ppm | 177,307 | ICP-OES |
| Mg | | 53 | |
| Ca | | 209.9 | |
| K | | 259.3 | |
| Na | | 19,973.0 | |
| Zn | | 30.6 | |
| Si | | 187.9 | |
| Cu | | N.D | |

As shown in Table 4, in the case of the conventional method, in order to recover lithium from scrap powder, the following steps are performed: the scrap powder is leached with sulfuric acid; then nickel, cobalt, and manganese are precipitated as hydroxide using sodium hydroxide; the solution is filtered; and the filtrate is reacted with sodium carbonate to produce lithium carbonate. Therefore, the obtained lithium carbonate has a high sodium content. However, in the case of the lithium recovery method according to one example of the present invention, the scrap powder is reduced and calcined without leaching, and lithium carbonate is converted to lithium hydrogen carbonate by adding carbon dioxide. Therefore, it is possible to obtain high-purity lithium carbonate with less amounts of sodium and sulfur ions.

### Experimental Example 4: Lithium carbonate recovery rate according to activated carbon usage.

Lithium carbonate was recovered from scrap powder in the same manner as in the example described above, except that 5 to 50 parts by weight of activated carbon was added per 100 parts by weight of the scrap powder. Then, a test for determining the lithium recovery rate was performed. The analysis results of the scrap powder used in Experimental Example 4 are shown in Table 5 below, and the lithium recovery rate measurement test results are shown in Table 6.

**[Table 5]**

| Classification | Unit | Result | Method |
|---|---|---|---|
| Li | wt% | 6.6 | ICP-OES |
| Ni | | 36.93 | |
| Co | | 11.91 | |
| Mn | | 9.41 | |
| Mg | ppm | 22 | |
| Ca | | 92 | |
| K | | 44 | |
| Na | | 107.0 | |
| Si | | 41 | |
| Cu | | N.D | |
| Al | | 787 | |

**[Table 6]**

| Scrap Powder Weight (g) | Activated Carbon Weight (g) | Lithium Hydrogen Carbonate Solution | Lithium Concentration (ppm) | Lithium Recovery Rate (%) |
|---|---|---|---|---|
| 100 | 5 | 5,220 | 837 | 66.2 |
| | 10 | 5,772 | 894 | 70.2 |
| | 20 | 5,521 | 1,059 | 82.9 |
| | 30 | 6,093 | 1,033 | 95.3 |
| | 40 | 6,090 | 900 | 83 |
| | 50 | 5,985 | 875 | 79.4 |

The formula for calculating the lithium recovery rate is based on the lithium content shown in Table 1. For example, for a case where the weight of activated carbon is 5g, (5,220*0.000837)/6.6*100=66.2%

### Confirmation of lithium carbonate through X-ray diffraction analysis

For X-ray diffraction analysis, a Rigaku D/MAX-2500 high-resolution X-ray diffractometer was used, and a graphite monochromate wavelength (CuKα = 1.5418 Å) was used. The analysis conditions of the original sample for quantitative analysis were set to 40 kV/35 mA, a scan interval of 0.02° in a 3-70° 2-theta section, and a scan time of 5 seconds. Diffraction values were recorded in a step-scan method, and 1.0-1.0-0.1° slits were used.

As shown in FIG. 3, it is seen that unlike previously known lithium carbonate (JCPDS no.22-1141), the lithium carbonate (D5-R) obtained through this experiment is a pure lithium carbonate powder with no other phases.

As confirmed from the results of the experimental examples, since the present invention recovers lithium using activated carbon as a reducing agent without using sodium carbonate, it is possible to solve the related art problems in which the concentration of wastewater is high and as a result, the recovered lithium carbonate contains a large amount of sodium. The present disclosure proposes an optimal usage of activated carbon to maximize the lithium recovery rate for the case of using activated carbon as a reducing agent rather than using sodium carbonate.

By the combination of the idea "adding a predetermined amount of activated carbon without using sodium carbonate in a reduction calcining step" and the "obtaining lithium carbonate through conversion to lithium hydrogen carbonate using carbon dioxide gas", it is possible to provide an effect of increasing the lithium recovery rate. The effect was confirmed through the experimental examples described above.

## Claims

1. A method of recovering lithium carbonate from a cathode material of a waste lithium secondary battery, the method comprising:
(a) preparing scrap powder comprising lithium nickel cobalt manganese oxide;
(b) reducing and calcining the scrap powder using activated carbon
(c) preparing a lithium hydrogen carbonate solution by adding scrap powder reduced and calcined in step (b) and carbon dioxide gas to soft water of a temperature of 8°C to 12°c;
(d) performing solid-liquid separation on the lithium hydrogen carbonate solution prepared in step (c);
(e) converting lithium hydrogen carbonate into lithium carbonate by heating, evaporating and concentrating the lithium hydrogen carbonate solution separated in step (d); and
(f) filtering the lithium carbonate converted in step (e) to obtain lithium carbonate.

2. The method of claim 1, wherein the scrap powder comprises lithium nickel cobalt manganese oxide (Li(Ni,Co,Mn)O₂.

3. The method of claim 1 or 2, wherein the scrap powder comprises LiNiₓCo_{y}Mn_{1-x-y}O₂ (0<x<1, 0<y<1) .

4. The method of one or more of the preceding claims, wherein in the step (c), 1500 to 2000 parts by weight of soft water is added per 100 parts by weight of the scrap powder.

5. The method of one or more of the preceding claims, wherein in the step (c), the carbon dioxide gas is added at a pressure of 1 to 5 kgf/cm³ and a flow rate of 0.5 to 5 L/min.

6. The method of one or more of the preceding claims, wherein the step (e) is performed at a temperature in a range of 60°C to 120°C.

7. The method of one or more of the preceding claims, wherein the activated carbon is added in the amount of 20 to 40 wt% with respect to the scrap powder.
